**Europäisches Patentamt**

(19) **European Patent Office**

**Office européen des brevets**

(11) Veröffentlichungsnummer: **0 125 200**

**B1**

(12) **EUROPÄISCHE PATENTSCHRIFT**

(45) Veröffentlichungstag der Patentschrift:
12.07.89

(21) Anmeldenummer: **84730040.7**

(22) Anmeldetag: **16.04.84**

(51) Int. Cl.⁴: **H 05 B 7/06**

(54) Ofengefäss für einen Gleichstrom-Lichtbogenofen.

(30) Priorität: **05.05.83 DE 3316366**

(43) Veröffentlichungstag der Anmeldung:
**14.11.84 Patentblatt 84/46**

(45) Bekanntmachung des Hinweises auf die Patenterteilung:
**12.07.89 Patentblatt 89/28**

(84) Benannte Vertragsstaaten:
**AT FR GB IT SE**

(56) Entgegenhaltungen:
**EP-A-0 058 817**
**EP-A-0 063 711**
**CH-A-91 970**
**CH-A-596 526**
**DE-C-219 575**
**GB-A-2 057 828**
**US-A-3 530 222**

(73) Patentinhaber: **MANNESMANN Aktiengesellschaft,
Mannesmannufer 2, D-4000 Düsseldorf 1 (DE)**

(72) Erfinder: **Müller, Norbert, Dipl.- Ing.,
Koopmannstrasse 119, D-4100 Duisburg 12 (DE)**

(74) Vertreter: **Meissner, Peter E., Dipl.- Ing.,
Herbertstrasse 22, D-1000 Berlin 33 (DE)**

## Beschreibung

Die Erfindung betrifft ein Ofengefäß für einen Gleichstrom-Lichtbogenofen, mit einer im Mittenbereich des Gefäßbodens vorgesehenen Kontaktvorrichtung zur Ableitung des Anodenstromes, wobei diese Kontaktvorrichtung aus einer Vielzahl parallel zur Gefäßachse verlaufender, im feuerfesten Material gehaltener, metallener Bodenelektrodenstifte sowie einer unterhalb des Ofengefäßes angeordneten gekühlten Stromableitung besteht.

Außer den Bodenkontakten mit einer Vielzahl von Metallstiften, die jeweils mit dem oberen Ende einer Metallplatte fest verbunden sind (DE-OS-2 950 890) sind auch Kontaktelektroden-Anordnungen bekannt (DE-OS-2 905 553), bei denen die Kontaktstifte mit einer unterhalb des Ofengefäßbodens angeordneten Basisplatte fest verbunden sind. Diese Basisplatte ist über vertikal verlaufende Wände mit der Unterseite des Gefäßbodens verbunden, und der Zwischenraum wird von einem Kühlstrom durchflossen. Eine ähnliche Ausführung ist aus der EP-A-0 058 817 bekannt.

Bei den bekannten Bodenelektroden-Anordnungen ist es nicht möglich, die Stifte, die einem unterschiedlichen Verschleiß unterliegen, ohne Demontagearbeiten einzeln zu wechseln. Außerdem ist es bei einem Wechsel des Bodenelektrodenbündels erforderlich, die feuerfeste Ausfütterung im ganzen Bodenbereich zu ergänzen.

Aufgabe der vorliegenden Erfindung ist es, ein Ofengefäß der eingangs genannten Art zu finden, dessen Aufbau es ermöglicht, die Bodenelektrodenstifte ohne erhebliche Montagearbeiten einzeln zu wechseln, ohne daß die Erneuerung der Fütterung im Bodenbereich erforderlich ist. Diese Aufgabe wird durch die kennzeichnenden Merkmale des Anspruchs 1 gelöst.

Vorteilhafte Weiterbildungen der Erfindung sind in den Unteransprüchen ausgeführt.

Durch die Erfindung ist es möglich, einzelne Bodenelektrodenstifte je nach dem Verschleiß zu wechseln. Weil die Bodenelektrodenstifte in Lochsteine eingesetzt sind, die in die Herdausmauerung integriert sind, ist es bei einem Wechsel nicht erforderlich, die ganze Ausmauerung im Bodenbereich zu erneuern.

Gegenüber den Ofengefäßen nach der bereits genannten DE-OS-2 950 890 ist ein vorteilhafter Wechsel von unten her möglich.

Der Verschleiß der einzelnen Stifte ist durch separate Temperaturkontrolle oder Druckkontrolle möglich. An den einzelnen Stiften können nämlich Temperaturfühler oder Druckmesser (bei einer Gaskühlung) angebracht werden. Durch die Druckmesser wird bei abgeschmolzenen Bodenelektrodenstiften ein Druckabfall angezeigt. Bei Verwendung von gebündelten Kontaktstiften ist eine örtliche Kontrolle des Verschleißes der Stifte nicht möglich.

Sekundär können auch die am äußeren Ende angebrachten Meßfühler zur Kontrolle des Verschleißes der Bodenausmauerung verwendet werden.

Die an einzelnen Bodenelektrodenstiften angebrachten Temperaturmeßfühler können zusätzlich örtliche Überhitzungen am Gefäßboden signalisieren.

Dadurch, daß die einzelnen Bodenelektrodenstifte gegenüber dem Gefäßboden isoliert sind, ist keine zusätzliche Isolation notwendig.

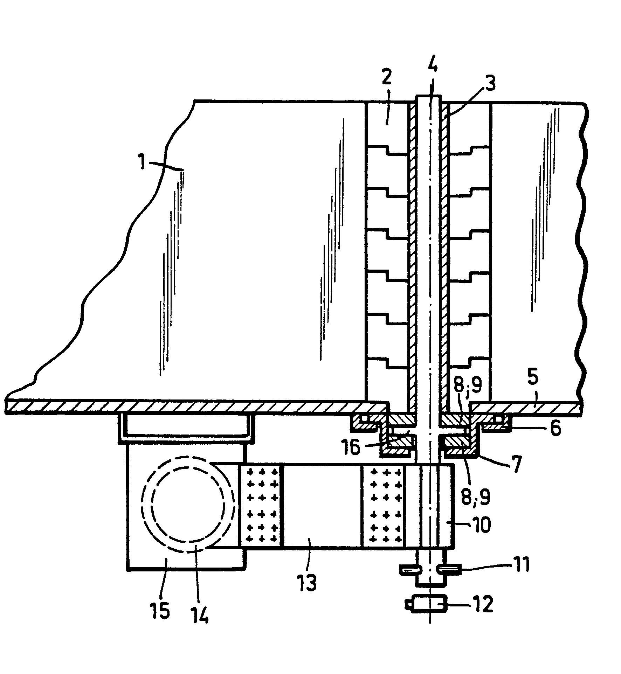

Die Erfindung wird anhand der beigefügten Zeichnung näher erläutert.

Mit 5 ist der Gefäßboden bezeichnet, 1 zeigt die Herdausmauerung.

Die Bodenelektrodenstifte 4 sind in den Gefäßboden 5 von unten her ein- und herausführbar angeordnet. Sie sind einzeln gegenüber dem Bodenmantel isoliert, teils durch die feuerfesten Lochsteine 2, die sie durchdringen, teils durch keramische Scheiben 8 und 9. Der Raum zwischen dem Bodenelektrodenstift 4 und den Lochsteinen 2 ist mit einer Vergußmasse 3 ausgefüllt.

Die Stifte 4 sind jeweils über eine Kontaktklemme 10 aus Stahl mit sprengplattierten Cu-Anschlußfahnen an die Anodenstromableitung 14 angeschlossen. Diese Ableitung besteht aus Cu-Rohren, die kreisförmig unter dem Gefäßboden angeordnet sind.

An der Außenseite des Gefäßbodens 5 ist jeweils eine Haltevorrichtung befestigt, die zur Feststellung des Bodenelektrodenstiftes 4 dient. Diese Haltevorrichtung besteht aus einer am Boden (5) angeschweißten Befestigungskralle (6), in die eine Haltebüchse 7 eingeschoben ist. In dem Raum zwischen der Kralle 6 und der Haltebüchse 7 wird ein an dem Bodenelektrodenstift 4 angeordneter Bund 16 festgehalten. Der Bund ist gegenüber den Halteteilen 6 und 7 durch die keramischen Isolierringe 8 und 9 isoliert.

In dem dargestellten Beispiel strömt durch die Rohre, die die Anodenstromableitung 14 bilden, inertes Gas, welches durch den Anschluß 11 zu- bzw. abgeleitet wird. Die einzelnen Stifte 4 sind an dem Kühlkreislauf angeschlossen.

Die Anodenstromableitung 14 ist ringförmig um die Gefäßachse angeordnet.

Die einzelnen Stifte 4 bilden Gruppen, die insbesondere um die verlängerten Achsen der Kathodenelektroden herum angeordnet sind.

In dem dargestellten Beispiel ist am unteren Ende des Stiftes 4 ein Temperaturfühler 12 angeschlossen.

Der Anschluß der Bodenelektrodenstifte 4 an der Anodenstromableitung 14 erfolgt jeweils über eine Kontaktklemme 10 mit einem metallenen Dehnungsband 13.

Das Rohr der Anodenstromableitung 14 ist an dem Gefäßboden 5 über eine Isolierklemme 15 angeschlossen.

**Patentansprüche**

1. Ofengefäß für einen Gleichstrom-Lichtbogenofen mit einer im Mittenbereich des Gefäßbodens vorgesehenen Kontaktvorrichtung zur Ableitung des Anodenstromes, wobei diese Kontaktvorrichtung aus einer Vielzahl parallel zur Gefäßchse verlaufender, im feuerfesten Material gehaltener, metallener Bodenelektrodenstifte sowie einer unterhalb des Ofengefäßes angeordneten gekühlten Stromableitung besteht,

dadurch gekennzeichnet,

daß jeder Bodenelektrodenstift (4) mittels einer Haltevorrichtung (6, 7, 16) lösbar am Gefäß (5) befestigt ist,

gegenüber dem Gefäß (5) einzeln isoliert ist,

durch feuerfeste Lochsteine (2) ein- und herausführbar hindurchgesteckt ist,

an die gekühlte Stromableitung (14) einzeln angeschlossen ist.

2. Ofengefäß nach Anspruch 1,

dadurch gekennzeichnet,

daß an der Außenseite des Gefäßbodens (5) jeweils eine Haltevorrichtung (6, 7,) für den Stift (4) befestigt ist.

3. Ofengefäß nach Anspruch 2,

dadurch gekennzeichnet,

daß die Haltevorrichtung aus einer am Boden (5) angeschweißten Befestigungskralle (6) besteht, in die eine Haltebüchse (7) eingeschoben ist, wobei ein am Elektrodenstift (4) angeordneter Bund (16) im von der Haltebüchse (7) eingeschlossenen Raum gegenüber der Haltebüchse (7) isoliert festgehalten ist.

4. Ofengefäß nach den Ansprüchen 1 bis 3,

dadurch gekennzeichnet,

daß einzelne Bodenelektrodenstifte (4) an den Kühlkreislauf der Anodenstromableitung (14) angeschlossen sind.

5. Ofengefäß nach den Ansprüchen 1 bis 4,

dadurch gekennzeichnet,

daß die Anodenstromableitung (14) ringförmig um die Gefäßachse angeordnet ist.

6. Ofengefäß nach den Ansprüchen 1 bis 5,

dadurch gekennzeichnet,

daß der Kühlkreislauf der Anodenstromableitung (14) durch einen Inertgaskreislauf (11) gebildet ist.

7. Ofengefäß nach den Ansprüchen 1 bis 6,

dadurch gekennzeichnet,

daß an dem Bodenelektrodenstift (4) ein Druckmesser angeschlossen ist.

8. Ofengefäß nach den Ansprüchen 1 bis 7,

dadurch gekennzeichnet,

daß die Bodenelektrodenstifte (4) jeweils über eine Kontaktklemme (10) mit einem metallenen Dehnungsband (13) an der Anodenstromableitung (14) angeschlossen ist.

9. Ofengefäß nach Anspruch 8,

dadurch gekennzeichnet,

daß die Anodenstromableitung (14) über eine Isolierklemme an dem Gefäßboden (5) angeschlossen ist.

**Claims**

1. A furnace vessel for a d.c. arc furnace, comprising a contact device which is arranged in the central area of the vessel base and which serves to discharge the anode current, where this contact device comprises a plurality of metallic base electrode pins which extend in parallel to the vessel axis and are retained in refractory material, and of a cooled current outlet which is arranged below the furnace vessel,

characterised in that each base electrode pin (4) is detachably fixed to the vessel (5) by means of a retaining device (6, 7, 16), is individually insulated from the vessel (5), extends through perforated refractory bricks (2) so as to be insertable and extractable, and is individually connected to the cooled current outlet (14).

2. A furnace vessel as claimed in Claim 1,

characterized in that a retaining device (6, 7) for the pin (4) is in each case attached to the exterior of the vessel base (5).

3. A furnace vessel as claimed in Claim 2,

characterized in that the retaining device consists of a fixing claw (6) which is welded to the base (5) and into which a retaining bush (7) is inserted, where a flange (16) which is arranged on the electrode pin (4) is held in the space enclosed by the retaining bush (7) so as to be insulated from the retaining bush (7).

4. A furnace vessel as claimed in the Claims 1 to 3,

characterized in that the individual base electrode pins (4) are connected to the cooling circuit of the anode current outlet (14).

5. A furnace vessel as claimed in the Claims 1 to 4,

characterized in that the anode current outlet (14) is arranged in an annular formation about the vessel axis.

6. A furnace vessel as claimed in the Claims 1 to 5,

characterized in that the cooling circuit of the anode current outlet (14) is formed by an inert gas circuit (11).

7. A furnace vessel as claimed in the Claims 1 to 6,

characterized in that a pressure sensor is connected to the base electrode pin (4).

8. A furnace vessel as claimed in the Claims 1 to 7,

characterized in that the base electrode pins (4) are each connected to the anode current outlet (14) via a contact terminal (10) with an extending metallic band (13).

9. A furnace vessel as claimed in the Claim 8,

characterized in that the anode current outlet (14) is connected to the vessel base (5) via an insulating clamp.

## Revendications

1. Cuve de four pour un four à arc à courant continu avec un dispositif de contact prévu dans la zone médiane du fond de la cuve, pour la dérivation du courant anodique, ce dispositif de contact se composant d'une multiplicité de tiges d'électrode de fond métalliques disposées parallèlement à l'axe de la cuve, maintenues dans du matériau réfractaire, ainsi que d'une dérivation de courant refroidie disposée au-dessous de la cuve du four, caractérisé en ce que chaque tige d'électrode de fond (4) est fixée à la cuve (5) de façon amovible au moyen d'un dispositif de fixation (6, 7, 16), isolée individuellement par rapport à la cuve (5), qu'elle traverse des briques perforées réfractaires (2) de façon à pouvoir être introduite et retirée, qu'elle est raccordée individuellement à la dérivation de courant refroidie (14).

2. Cuve de four suivant revendication 1, caractérisée en ce que un dispositif de fixation (6, 7) pour la tige (4) est fixé sur la face extérieure du fond de la cuve (5)

3. Cuve de four suivant revendication 2, caractérisée en ce que le dispositif de fixation se compose d'une griffe de fixation (6) soudée au fond (5), glissée dans une douille de retenue (7), un collet (16) disposé à la tige d'électrode (4) étant maintenu dans l'espace enfermé par la douille de retenue (7) et isolé par rapport à la douille de retenue (7).

4. Cuve de four suivant les revendications 1 à 3, caractérisée en ce que différentes tiges d'électrode de fond (4) sont raccordées aux circuits de refroidissement de la dérivation de courant anodique (14).

5. Cuve de four suivant les revendications 1 à 4, caractérisée en ce que la dérivation de courant anodique (14) est disposée en forme d'anneau autour de l'axe de la cuve.

6. Cuve de four suivant les revendications 1 à 5, caractérisée en ce que le circuit de refroidissement de la dérivation de courant anodique (14) est formé par un circuit à gaz inerte (11).

7. Cuve de four suivant les revendications 1 à 6, caractérisée en ce que un manomètre est raccordé à la tige d'électrode de fond (4).

8. Cuve de four suivant les revendications 1 à 7, caractérisée en ce que chaque tige d'électrode de fond (4) est raccordée à la dérivation de courant anodique (14) par l'intermédiaire d'une borne de contact (10) par une connexion souple métallique (13).

9. Cuve de four suivant la revendication 8 caractérisée en ce que la dérivation de courant anodique (14) est raccordée au fond de la cuve (5) par l'intermédiaire d'une borne isolante.